# EUROPÄISCHE PATENTSCHRIFT

(11) **EP 3 793 948 B1**
(45) Veröffentlichungstag und Bekanntmachung des Hinweises auf die Patenterteilung: **20.11.2024**
(21) Anmeldenummer: 19717466.7
(22) Anmeldetag: 09.04.2019
(51) Int. Cl.: C02F 1/44, C02F 1/28, B01D 29/58, B64D 11/00

(54) **FILTERVORRICHTUNG, INSBESONDERE FILTERKARTUSCHE, FÜR WASSERFILTER IN LUFTFAHRZEUGEN**
FILTER DEVICE, PARTICULARLY FILTER CARTRIDGE, FOR WATER FILTERS IN AIRCRAFT
DISPOSITIF FILTRANT, NOTAMMENT CARTOUCHE FILTRANTE, POUR FILTRES À EAU DANS UN AVION

(30) Priorität: 10.04.2018 DE 202018101926 U
(43) Veröffentlichungstag der Anmeldung: 24.03.2021
(73) Patentinhaber: Aqua Free GmbH, 22525 Hamburg (DE)
(72) Erfinder: SAUER, Matthias, 22757 Hamburg (DE)
(74) Vertreter: RGTH
(86) Internationale Anmeldenummer: PCT/EP2019/058920
(87) Internationale Veröffentlichungsnummer: WO 2019/197388

(56) Entgegenhaltungen:
- WO-A1-2014/077414
- DE-B4- 10 196 530
- US-A- 4 909 937
- US-A1- 2005 067 340
- US-A1- 2016 361 673

## Beschreibung

Die vorliegende Erfindung betrifft eine Filtervorrichtung, insbesondere Filterkartusche, für Wasserfilter in Luftfahrzeugen, gemäß Anspruch 1. Ferner betrifft die vorliegende Erfindung einen Filterbehälter gemäß Anspruch 11, ein Luftfahrzeug mit einem Wasserfilter gemäß Anspruch 13 sowie ein Verfahren zur Filterung von Wasser in einem Luftfahrzeug, gemäß Anspruch 14.

### Technologischer Hintergrund

Aufgrund der strengen Hygienebestimmungen in der Luftfahrtindustrie müssen in Luftfahrzeugen, insbesondere in Passagierflugzeugen, eingesetzte Wasserfilter hohen Anforderungen genügen. Insbesondere müssen derartige Wasserfilter ausgebildet sein, bakterien- oder keimfreies Wasser bereitzustellen und die Bildung von Biofilmen in dem Wassersystem des Luftfahrzeugs zu unterbinden. Bei bekannten Wasserfiltern bzw. Filtervorrichtungen für Wasserfilter kann eine unzureichende Filterung des Wassers dazu führen, dass lange Desinfektionsphasen notwendig sind, während der das Luftfahrzeug, insbesondere das Flugzeug, nicht eingesetzt werden kann.

Ein Grund für eine mangelnde Hygiene in einem Luftfahrzeug können dabei Wasserfilter bzw. Filtervorrichtungen sein, in welchen Wasser während eines Austausches der Filtervorrichtung in dem Wasserfilter bzw. in der Filtervorrichtung steht. Dieses stehende Wasser ist eine Quelle von Bakterien oder Biofilmen oder anderen unhygienischen Substanzen. Beim Austausch der Filtervorrichtung kann das in der Filtervorrichtung stehende Wasser aus dem Filterbehälter des Wasserfilters des Luftfahrzeugs austreten und die Umgebung des Wasserfilters kontaminieren, sodass eine intensive Reinigung der Umgebung des Wasserfilters vorgenommen werden muss.

Aus der US 4,909,937 A ist ein Integralfilter zum Trennen von Fluidkomponenten bekannt, der in ein umgebendes Gehäuse mit Fluidanschlüssen eingeschlossen werden kann. Der durchlässige Rohrmantel des Filters besteht aus mehreren rohrförmigen Filterelementen mit unterschiedlichen Filterqualitäten, deren Querschnitte so abgestuft sind, dass ein kleineres Filterelement von einem größeren Filterelement umgeben ist.

### Zusammenfassung der Erfindung: Aufgabe, Lösung, Vorteile

Es ist daher Aufgabe der vorliegenden Erfindung, eine Filtervorrichtung, insbesondere Filterkartusche, für Wasserfilter in Luftfahrzeugen bereitzustellen, mit der eine den strengen hygienischen Anforderungen in der Luftfahrtindustrie genügende Wasserfilterung ermöglicht wird und durch die insbesondere bei einem Austausch der Filtervorrichtung die Gefahr einer Kontamination der Umgebung des Wasserfilters, insbesondere eines Innenraum des Luftfahrzeugs, verringert wird. Ferner ist es Aufgabe der vorliegenden Erfindung, einen Filterbehälter für einen Wasserfilter, einen Wasserfilter in einem Luftfahrzeug und ein Verfahren zur Filterung von Wasser in einem Luftfahrzeug bereitzustellen, mit welchen die vorgenannten Vorteile erzielt werden.

Zur Lösung der der Erfindung zugrunde liegenden Aufgabe wird eine Filtervorrichtung, insbesondere Filterkartusche, für Wasserfilter in Luftfahrzeugen vorgeschlagen, umfassend ein Gehäuse, wobei das Gehäuse einen Eintrittsbereich für zu filterndes Wasser und einen Austrittsbereich für gefiltertes Wasser umfasst, wobei das Gehäuse einen Deckel und einen Boden umfasst, wobei das Gehäuse im Wesentlichen zylinderförmig mit einer Mantelfläche und einer ersten Stirnseite und einer zweiten Stirnseite ausgebildet ist, wobei der Eintrittsbereich in der Mantelfläche des Gehäuses angeordnet ist, wobei in dem Gehäuse eine erste Filtereinheit und eine zweite Filtereinheit angeordnet sind, wobei die erste Filtereinheit einen Aktivkohlefilter umfasst und wobei die zweite Filtereinheit einen Mikrofilter umfasst, wobei der Austrittsbereich im Boden angeordnet ist, wobei der Deckel und der Boden an der ersten und der zweiten Stirnseite angeordnet sind und mit der ersten Filtereinheit verklebt sind, wobei der Boden einen zylindrischen Aufnahmebereich aufweist, in dem die zweite Filtereinheit angeordnet ist, wobei Dichtringe zwischen der zweiten Filtereinheit und dem Aufnahmebereich angeordnet sind, wobei ferner vorgesehen ist, dass der Eintrittsbereich eine Gitterstruktur aufweist, durch die Wasser in die Filtervorrichtung eintreten kann, und dass die Gitterstruktur zur Erhöhung der Stabilität aus einer Waben umfassenden wabenförmigen Struktur besteht, wobei innerhalb der einzelnen Waben Poren oder Durchlässe oder Durchlassöffnungen angeordnet sind.

Durch den erfindungsgemäßen Wasserfilter wird es möglich, Wasser in einem Luftfahrzeug bakterien- und keimfrei zu filtern und die Bildung von Biofilmen zu verhindern. Insbesondere durch die Kombination einer ersten Filtereinheit mit einer zweiten Filtereinheit in einem Gehäuse, wobei die erste Filtereinheit einen Aktivkohlefilter umfasst und wobei die zweite Filtereinheit einen Mikrofilter umfasst, wird eine besonders platzsparende und hygienische Filterung von Wasser in einem Luftfahrzeug ermöglicht. Hierdurch können insbesondere die notwendigen Desinfektionsintervalle von drei auf vier bis sechs Monate erhöht und die Kosten für chemische Tests und Labortests verringert werden. Durch die Kombination einer ersten Filtereinheit umfassenden einen Aktivkohlefilter und einer zweite Filtereinheit umfassend einen Mikrofilter, können alle Bakterien und Mikroben sowie Chlor, Gerüche, Schwermetalle und weitere Chemikalien aus dem Wassersystem des Luftfahrzeugs gefiltert werden.

Das Gehäuse ist im Wesentlichen zylinderförmig mit einer Mantelfläche und einer ersten Stirnseite und einer zweiten Stirnseite ausgebildet.

Die Filtervorrichtung ist somit zylinderförmig ausgebildet und weist eine erste und eine zweite Stirnseite auf. In einer Umfangsrichtung weist das Gehäuse eine Außenwand auf, welche einer Mantelfläche der Zylinderform entspricht.

Erfindungsgemäß ist ferner vorgesehen, dass das Gehäuse einen Deckel und einen Boden umfasst, wobei der Austrittsbereich im Boden angeordnet ist, und dass der Deckel und der Boden an der ersten und der zweiten Stirnseite angeordnet sind, und mit der ersten Filtereinheit verklebt sind.

Durch die Anordnung des Austrittsbereichs im Boden wird sichergestellt, dass Wasser aus dem Inneren der Filtervorrichtung und/oder aus dem Filterbehälter umfassend die Filtervorrichtung, stets ablaufen kann, sodass sich kein stehendes Wasserreservoir in dem Filterbehälter oder in der Filtervorrichtung bildet.

Der Boden weist einen zylindrischen Aufnahmebereich auf, in dem die zweite Filtereinheit angeordnet ist, wobei Dichtmittel, nämlich Dichtringe, zwischen der zweiten Filtereinheit und dem Aufnahmebereich angeordnet sind.

Der zylindrische Aufnahmebereich kann dabei so ausgebildet sein, dass ein unterer Bereich der zweiten Filtereinheit in den zylindrischen Aufnahmebereich eingeschraubt oder eingepresst wird. Durch die Dichtmittel wird verhindert, dass Wasser an dem Mikrofilter der zweiten Filtereinheit vorbei zum Austrittsbereich fließt. Bevorzugt ist der Austrittsbereich zentral im Boden und insbesondere zentral im Aufnahmebereich angeordnet.

Erfindungsgemäß ist vorgesehen, dass der Eintrittsbereich eine Gitterstruktur aufweist, durch die Wasser in die Filtervorrichtung eintreten kann.

Die Gitterstruktur besteht zur Erhöhung der Stabilität aus einer wabenförmigen Struktur, wobei innerhalb bzw. im Innenraum der einzelnen Waben Poren oder Durchlässe oder Durchlassöffnungen angeordnet sind.

Bevorzugt kann vorgesehen sein, dass die Filtervorrichtung in einem, bevorzugt für den Einsatz in Luftfahrzeugen, insbesondere für Passagierflugzeuge, zugelassenem, Filterbehälter anordbar und/oder angeordnet ist, und/oder dass die Filtervorrichtung derart ausgebildet ist, dass in einem in einem Filterbehälter angeordneten Zustand der Filtervorrichtung kein Reservoir von Wasser innerhalb der Filtervorrichtung vorhanden ist, sodass die Filtervorrichtung ohne Kontamination eines Außenbereichs des Filterbehälters aus dem Filterbehälter entnommen werden kann.

Der für den Einsatz in Luftfahrzeugen zugelassene Filterbehälter nimmt die Filtervorrichtung auf. Im Betriebszustand sind der Filterbehälter und die darin angeordnete Filtervorrichtung so angeordnet und ausgebildet, dass sich innerhalb des Filterbehälters bzw. innerhalb der Filtervorrichtung kein stehendes Wasserreservoir bildet. Hierdurch wird ermöglicht, dass die Filtervorrichtung aus dem Filterbehälter entfernt werden kann, ohne dass besondere Rücksicht auf in der Filtervorrichtung verbliebenes stehendes Wasser genommen werden muss. Durch diese Maßnahme kann das Risiko einer Kontamination der Außenumgebung des Filterbehälters bzw. eines Innenraums des Luftfahrzeugs verringert werden.

Bevorzugt wird dieser Vorteil dadurch erreicht, dass zu filterndes Wasser in einem unteren Bereich oder von unten in den Filterbehälter und/oder in die Filtervorrichtung eintritt und dass das gefilterte Wasser aus einem unteren Bereich bzw. unten aus dem Filterbehälter und/oder der Filtervorrichtung austritt.

Durch das Ein- und Austreten des zu filternden Wassers bzw. des gefilterten Wassers im unteren Bereich bzw. unten in dem Filterbehälter und/oder in der Filtervorrichtung wird sichergestellt, dass sich kein stehendes Wasserreservoir in dem Filterbehälter und/oder in der Filtervorrichtung ausbildet.

Bevorzugt ist die zweite Filtereinheit bzw. der Mikrofilter der zweiten Filtereinheit als Hohlfasermikrofiltermembran ausgebildet.

Durch die zweite Filtereinheit, insbesondere den Mikrofilter, kann steriles Wasser bereitgestellt werden.

Mit besonderem Vorteil ist der in Luftfahrzeugen zugelassene Filterbehälter ein zertifizierter Filterbehälter.

Durch die Möglichkeit, die Filtervorrichtung in einen für den Betrieb in Luftfahrzeugen zugelassenen Filterbehälter einzusetzen, kann die Filtervorrichtung in bereits bestehenden und zugelassenen Wasserfiltern für Luftfahrzeuge eingesetzt werden.

Mit besonderem Vorteil kann vorgesehen sein, dass das Gehäuse und/oder die erste Filtereinheit einen Durchmesser von 50 mm bis 100 mm, bevorzugt von 70 mm bis 90 mm, weiter bevorzugt von 80 mm bis 90 mm, insbesondere bevorzugt von 85 bis 87 mm, ganz besonders bevorzugt von 86 mm, aufweist.

Weiter bevorzugt kann vorgesehen sein, dass die erste Filtereinheit einen Innendurchmesser von 20 mm bis 80 mm, bevorzugt von 30 mm bis 60 mm, weiter bevorzugt von 57 mm bis 59 mm, insbesondere bevorzugt von 58 mm, aufweist.

Insbesondere bevorzugt kann vorgesehen sein, dass das die erste Filtereinheit eine Höhe von 50 mm bis 150 mm, bevorzugt von 80 mm bis 120 mm, weiter bevorzugt von 100 mm bis 110 mm, insbesondere bevorzugt von 105 mm bis 106 mm, ganz besonders bevorzugt von 105,5 mm, aufweist.

Bevorzugt kann vorgesehen sein, dass das Gehäuse eine Höhe von 50 mm bis 150 mm, bevorzugt von 100 mm bis 140 mm, weiter bevorzugt von 110 mm bis 130 mm, insbesondere bevorzugt von 120 bis 130 mm, ganz besonders bevorzugt von 124,2 mm, aufweist.

Bevorzugt ist vorgesehen, dass die erste Stirnseite eine untere Stirnseite des Gehäuses ist, und/oder dass der Austrittsbereich in der ersten Stirnseite angeordnet ist, wobei der Austrittsbereich bevorzugt einen, insbesondere mit einem Außengewinde versehenen, Abflussstutzen umfasst oder ist.

Durch das Vorsehen eines Außengewindes an dem Abflussstutzen kann der Abflussstutzen in einfacher Weise mit einem Wasserauslass eines bekannten Filterbehälters verbunden werden. Insbesondere bei der Anordnung der Filtervorrichtung in einem derartigen Gehäuse kann durch die Verbindung des mit einem Außengewinde versehenen Abflussstutzens mit dem Wasserauslass eine flüssigkeitsdichte Verbindung bereitgestellt werden.

Weiter kann vorgesehen sein, dass der Mikrofilter eine Vielzahl von Poren aufweist, wobei die Poren eine Größe zwischen 0,001 µm und 1,0 µm, bevorzugt zwischen 0,01 µm und 0,5 µm, weiter bevorzugt zwischen 0,1 µm und 0,3 µm, insbesondere bevorzugt zwischen 0,15 µm und 0,25 µm, ganz besonders bevorzugt von 0,2 µm, aufweisen.

Mit der so gewählten Porengröße sind die Poren des Mikrofilters kleiner als alle bekannten wassergetragenen Bakterien. Daher können Bakterien und Keime nicht durch die zweite Filtereinheit hindurch treten. Insbesondere können unerwünschte Effekte, wie beispielsweise aus einem Aktivkohlefilter austretende Bakterien, unterbunden werden.

Weiter bevorzugt ist vorgesehen, dass die erste Filtereinheit die zweite Filtereinheit zumindest teilweise, bevorzugt vollständig, in einer Umfangsrichtung umschließt, wobei bevorzugt die erste Filtereinheit in Form eines Hohlzylinders ausgebildet ist, wobei weiter bevorzugt die zweite Filtereinheit in Form eines Hohlzylinders ausgebildet ist, und wobei die zweite Filtereinheit in einem Innenbereich oder einem Innenraum der ersten Filtereinheit angeordnet ist.

Mit weiterem Vorteil kann vorgesehen sein, dass die Filtervorrichtung derart ausgebildet ist, dass zu filterndes Wasser in einer Strömungsrichtung durch den Eintrittsbereich, durch die erste Filtereinheit, durch die zweite Filtereinheit und durch den Austrittsbereich, in dieser Reihenfolge, und/oder umgekehrt strömen kann.

Insbesondere bevorzugt ist vorgesehen, dass zwischen der ersten Filtereinheit und der zweiten Filtereinheit eine dritte Filtereinheit angeordnet ist, wobei die dritte Filtereinheit bevorzugt eine Vielzahl von Poren oder Gitteröffnungen aufweist, wobei die Poren und/oder die Gitteröffnungen der dritten Filtereinheit einen Durchmesser von 50 µm bis 200 µm, bevorzugt von 75 µm bis 125 µm, besonders bevorzugt von 100 µm, aufweisen.

Mit besonderem Vorteil kann vorgesehen sein, dass auf einer Außenseite und/oder einer Innenseite der ersten Filtereinheit ein Schutznetz und/oder ein Schutzgitter angeordnet ist, wobei das Schutznetz und/oder das Schutzgitter derart ausgebildet ist, dass ein Austritt von Aktivkohlepartikeln aus der ersten Filtereinheit verhinderbar ist und/oder verhindert wird.

Durch Vorsehen des Schutznetzes und/oder des Schutzgitters kann verhindert werden, dass Aktivkohlepartikel aus der ersten Filtereinheit austreten und in Richtung der zweiten Filtereinheit vom zu filternden Wasser getragen werden und die zweite Filtereinheit verstopfen.

Mit Vorteil kann vorgesehen sein, dass der Aktivkohlefilter aus säuregewaschener Kokosnussschale besteht oder diese umfasst.

Bevorzugt wird es durch die Filtervorrichtung möglich, dass ein Rückhalteäquivalent von Bakterien (Brevundimonas diminuta) von LRV (Log Reduction Value) >7 pro cm² Filterfläche erreicht wird.

Bevorzugt ist die Filtervorrichtung für ein Durchflussvolumen von ca. 12.700 I bei 5l/min, entsprechend ca. 3.350 US-Flüssigkeitsgallonen bei 1,32 g/min, ausgelegt.

Ferner kann vorgesehen sein, dass die Durchflussrate 10l/min bei 0,345 bar/min (5 psi/min) und/oder 4 l/min bei 5 bar/min (72,5 psi/min) beträgt.

Die Filtervorrichtung ist bevorzugt für einen maximalen Betriebsdruck von 5bar bzw. 72,5psi und/oder für eine maximale Betriebstemperatur 40°C ausgelegt.

Bevorzugt weist der Aktivkohlefilter der ersten Filtereinheit eine Porengröße zwischen 0,001 µm und 2,0 µm, bevorzugt zwischen 0,01 µm und 1,0 µm, weiter bevorzugt zwischen 0,3 µm und 0,7 µm, insbesondere bevorzugt zwischen 0,4 µm und 0,6 µm, ganz besonders bevorzugt von 0,5 µm, auf.

Eine weitere erfindungsgemäße Lösung besteht in der Bereitstellung eines Filterbehälters mit einem Wassereinlass und einem Wasserauslass, wobei der Wassereinlass und der Wasserauslass in einem unteren Bereich, bevorzugt an einer Unterseite, des Filterbehälters angeordnet sind, dadurch gekennzeichnet, dass eine vorbeschriebene Filtervorrichtung in einem Innenraum des Filterbehälters angeordnet ist.

Durch den bodenseitig oder im unteren Bereich des Filterbehälters angeordneten Wassereinlass und Wasserauslass im Zusammenspiel mit der innerhalb des Filterbehälters angeordneten Filtervorrichtung kann eine besonders effektive Wasserfilterung in einem Luftfahrzeug ermöglicht werden. Insbesondere wird durch die spezielle Anordnung von Wasserauslass und Wassereinlass und der entsprechenden Ausgestaltung der Filtervorrichtung sichergestellt, dass sich kein stehendes Wasserreservoir in dem Filterbehälter bzw. in der im Filterbehälter angeordneten Filtervorrichtung ausbildet.

Hierdurch kann eine Kontamination der Außenumgebung des Filterbehälters bei einem Wechsel der Filtervorrichtung verhindert werden.

Mit besonderem Vorteil kann vorgesehen sein, dass der Wasserauslass mit dem Austrittsbereich, insbesondere dem Abflussstutzen, der Filtervorrichtung verbunden ist.

Weiter vorteilhaft kann vorgesehen sein, dass zwischen einer Außenwand des Filterbehälters und dem Gehäuse der Filtervorrichtung ein, insbesondere umlaufender, Zwischenraum angeordnet ist, sodass durch den Wassereinlass eintretendes Wasser in den die Filtervorrichtung zumindest teilweise umgebenden Zwischenraum und anschließend durch den Eintrittsbereich der Filtervorrichtung in die Filtervorrichtung eintreten kann.

Mit weiterem Vorteil kann vorgesehen sein, dass der Filterbehälter zweiteilig ausgebildet ist.

Eine weitere Lösung der der Erfindung zu Grunde liegenden Aufgabe besteht in der Bereitstellung eines Wasserfilters in einem Luftfahrzeug, insbesondere in einem Flugzeug, umfassend eine vorbeschriebene Filtervorrichtung und/oder umfassend einen vorbeschriebenen Filterbehälter.

Ferner besteht eine Lösung der der Erfindung zu Grunde liegenden Aufgabe in der Bereitstellung eines Verfahrens zur Filterung von Wasser in einem Luftfahrzeug, insbesondere in einem Flugzeug, unter Verwendung eines vorbeschriebenen Filterbehälters, wobei zu filterndes Wasser in einem unteren Bereich des Filterbehälters durch einen Wassereinlass eingeleitet wird, wobei das Wasser durch einen Aktivkohlefilter und anschließend durch einen Mikrofilter geleitet wird, und wobei das gefilterte Wasser durch einen Wasserauslass in einem unteren Bereich des Filterbehälters austritt.

### Kurze Beschreibung der Figuren

Die Erfindung wird nachstehend anhand der Figuren näher erläutert. Es zeigen:
- Fig. 1: eine perspektivische Ansicht einer Filtervorrichtung,
- Fig. 2: eine Querschnittsansicht einer Filtervorrichtung,
- Fig. 3: eine Seitenansicht einer Filtervorrichtung,
- Fig. 4: eine weitere perspektivische Ansicht einer Filtervorrichtung,
- Fig. 5: eine Aufsicht auf eine Filtervorrichtung,
- Fig. 6: einen Filterbehälter,
- Fig. 7: eine Seitenansicht eines Filterbehälters,
- Fig. 8: einen Querschnitt eines Filterbehälters mit einer Filtervorrichtung,
- Fig. 9: eine Innenansicht eines oberen Teils eines Filterbehälters,
- Fig. 10: eine Detailansicht eines oberen Teils eines Filterbehälters mit einer Filtervorrichtung,
- Fig. 11: eine Detailansicht eines unteren Teils eines Filterbehälters mit einer Filtervorrichtung, und
- Fig. 12: eine weitere Detailansicht eines unteren Teils eines Filterbehälters mit einer Filtervorrichtung.

### Ausführliche Beschreibung der Figuren

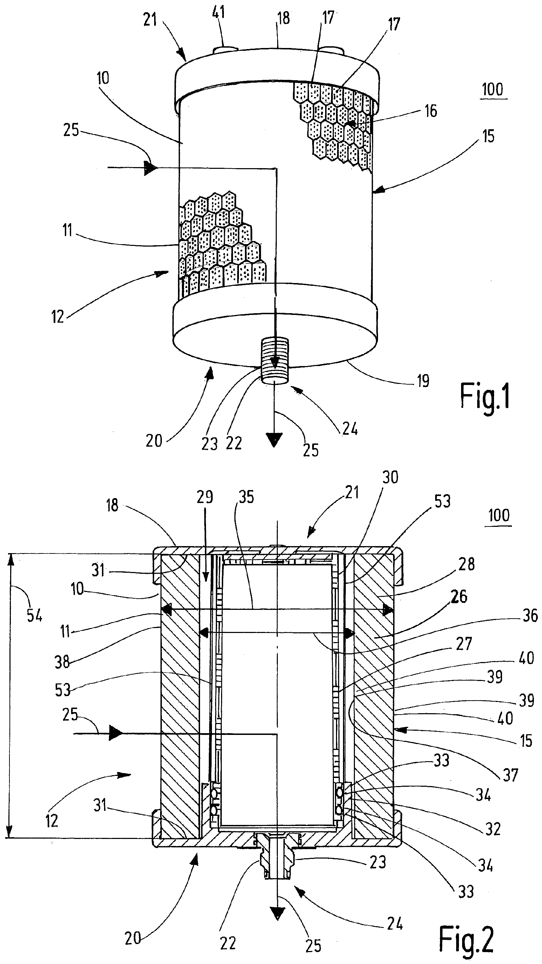

Fig. 1 zeigt eine Filtervorrichtung 100, welche als Filterkartusche 10 ausgebildet ist. Die Filtervorrichtung 100 ist für den Einsatz in Wasserfiltern in Luftfahrzeugen, insbesondere Flugzeugen ausgebildet. Die Filtervorrichtung 100 umfasst ein Gehäuse 11, wobei ein Eintrittsbereich 12 in einer Außenwand 13 bzw. in einer Mantelfläche 14 des Gehäuses 11 angeordnet ist. Der Eintrittsbereich 12 umfasst eine Gitterstruktur 15, welche wiederum aus der Überlagerung von Waben 16 und in den Waben 16 angeordneten Durchlassöffnungen 17 besteht. Die Filtervorrichtung 100 umfasst ferner einen Boden 19 an einer ersten Stirnseite 20 und einen Deckel 18 an einer zweiten Stirnseite 21 und. Zentral im Boden 19 ist ein Austrittsbereich 24 in Form eines Abflussstutzen 22 angeordnet. Der Abflussstutzen 22 weist ein Außengewinde 23 auf.

Mit dem Pfeil 25 ist die Fließrichtung zu filternden Wassers eingezeichnet. Das zu filternde Wasser tritt durch den Eintrittsbereich 12 in die Filtervorrichtung 100 ein, durchläuft wie in Fig. 2 gezeigt eine im Gehäuse 11 angeordnete erste Filtereinheit 26 und eine zweite Filtereinheit 27 und tritt aus dem Abflussstutzen 22 aus.

Fig. 2 zeigt eine Querschnittsansicht durch die Filtervorrichtung 100. In dem Gehäuse 11 ist eine, insbesondere zylinderförmig ausgebildete, erste Filtereinheit 26 angeordnet. Die erste Filtereinheit 26 umfasst einen Aktivkohlefilter 28. In einem Innenraum 29 der ersten Filtereinheit 26 ist eine zweite Filtereinheit 27 angeordnet, welche einen Mikrofilter 30 umfasst. An der unteren, ersten Stirnseite 20 und an der oberen, zweiten Stirnseite 21 des Gehäuses 11 sind der Boden 19 bzw. der Deckel 18 der Filtervorrichtung 100 befestigt und an Klebestellen 31 mit der ersten Filtereinheit 26 verklebt. Der Boden 19 der Filtervorrichtung 100 weist einen als Abflussstutzen 22 ausgebildeten Austrittsbereich 24 auf, welcher zentral im Boden 19 angeordnet ist. Ferner weist der Boden 19 einen Aufnahmebereich 32 für die zweite Filtereinheit 27 auf. Die zweite Filtereinheit 27 kann in den Aufnahmebereich 32 eingeschraubt oder eingepresst sein. Ferner sind zwischen dem Aufnahmebereich 32 und der zweiten Filtereinheit 27 Dichtmittel 33 vorgesehen, beispielsweise Dichtringe 34. Der Aufnahmebereich 32 ist ebenfalls zylinderförmig ausgebildet. Der Durchmesser 35 des Gehäuses 11 beträgt 86 mm. Der Innendurchmesser 36 der ersten Filtereinheit 26 beträgt 58 mm. Auf der Innenseite 37 und auf der Außenseite 38 der ersten Filtereinheit 26, insbesondere zwischen der Gitterstruktur 15 und der ersten Filtereinheit 26, ist ein Schutzgitter 39 oder ein Schutznetz 40 angeordnet, welches derart ausgebildet ist, dass ein Austritt von Partikeln des Aktivkohlefilters 28 verhindert wird. Durch diese Maßnahme wird verhindert, dass der Mikrofilter 30 der zweiten Filtereinheit 27 verstopft.

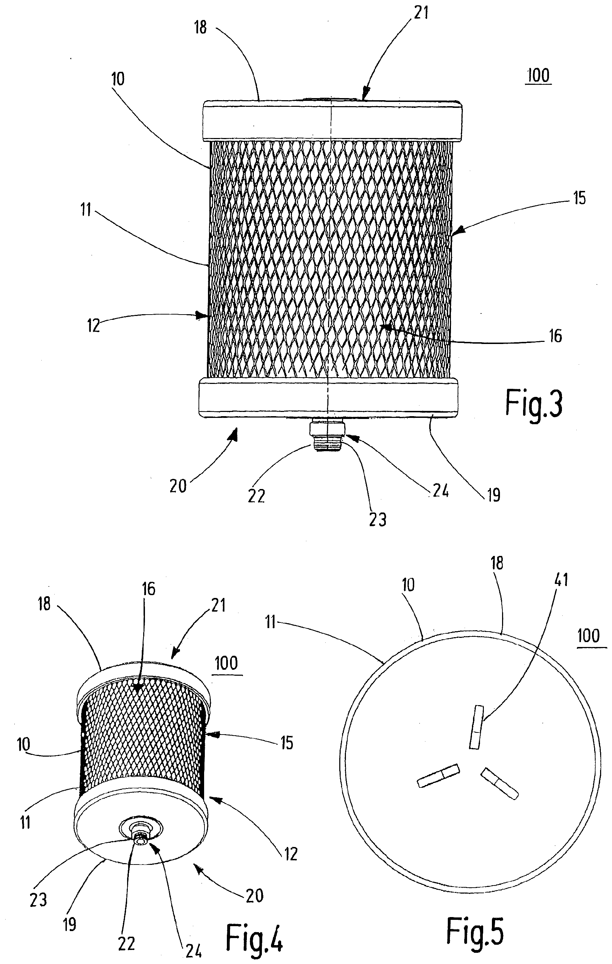

Eine Seitenansicht der Filtervorrichtung 100 ist in Fig. 3 gezeigt.

Fig. 4 zeigt eine perspektivische Ansicht der Filtervorrichtung 100 und Fig. 5 ist eine Aufsicht auf den Deckel 18 der Filtervorrichtung 100. Der Deckel 18 weist Justierrippen 41 auf.

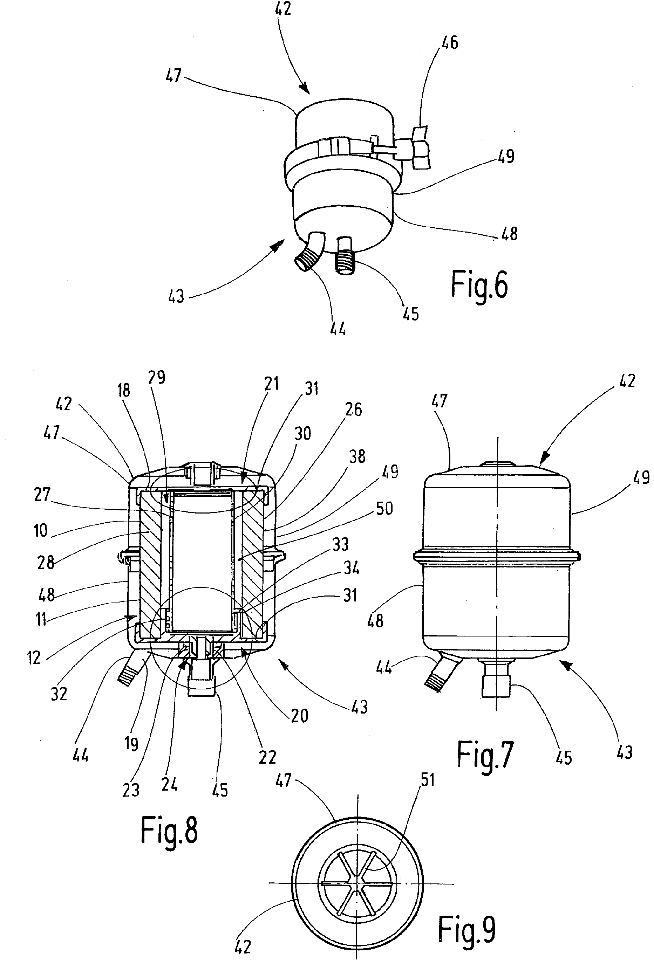

Fig. 6 und 7 zeigen beispielhaft einen Filterbehälter 42. Der Filterbehälter 42 weist im unteren Bereich 43 einen Wassereinlass 44 und einen Wasserauslass 45 auf. Über einen Sicherungsmechanismus 46 kann der Filterbehälter 42 der geöffnet werden, sodass eine im Inneren des Filterbehälters 42 angeordnete Filtervorrichtung 100 (Fig. 8) entnommen werden kann.

Fig. 8 zeigt einen Querschnitt durch den Filterbehälter 42 der Fig. 6 und 7. Innerhalb des Filterbehälters 42 ist eine Filtervorrichtung 100 nach einer der Fig. 1 bis 5 angeordnet. Der Filterbehälter 42 ist zweiteilig ausgebildet und weist einen oberen Teil 47 und einen unteren Teil 48 auf. Zwischen der Außenseite 38 der Filtervorrichtung 100, insbesondere zwischen der Gitterstruktur 15 und der Außenwand 49 des Filterbehälters 42, ist ein Zwischenraum 50 ausgebildet. Somit kann zu filterndes Wasser von unten durch den Wassereinlass 44 in den Filterbehälter 42 eintreten. Das Wasser strömt dann von außen durch die Gitterstruktur 15, durch den Aktivkohlefilter 28, durch den Mikrofilter 30 und durch den Abflussstutzen 22 und den Wasserauslass 45 des Filterbehälters 42. Durch den Eintritt und den Austritt des zu filternden bzw. des gefilterten Wassers in und aus dem Filterbehälter 42 bzw. der Filtervorrichtung 100 im unteren Bereich 43 kann stets sichergestellt werden, dass Wasser aus dem Filterbehälter 42 und der Filtervorrichtung 100 abläuft und sich somit kein stehendes Wasserreservoir innerhalb des Filterbehälters 42 bzw. der Filtervorrichtung 100 bildet.

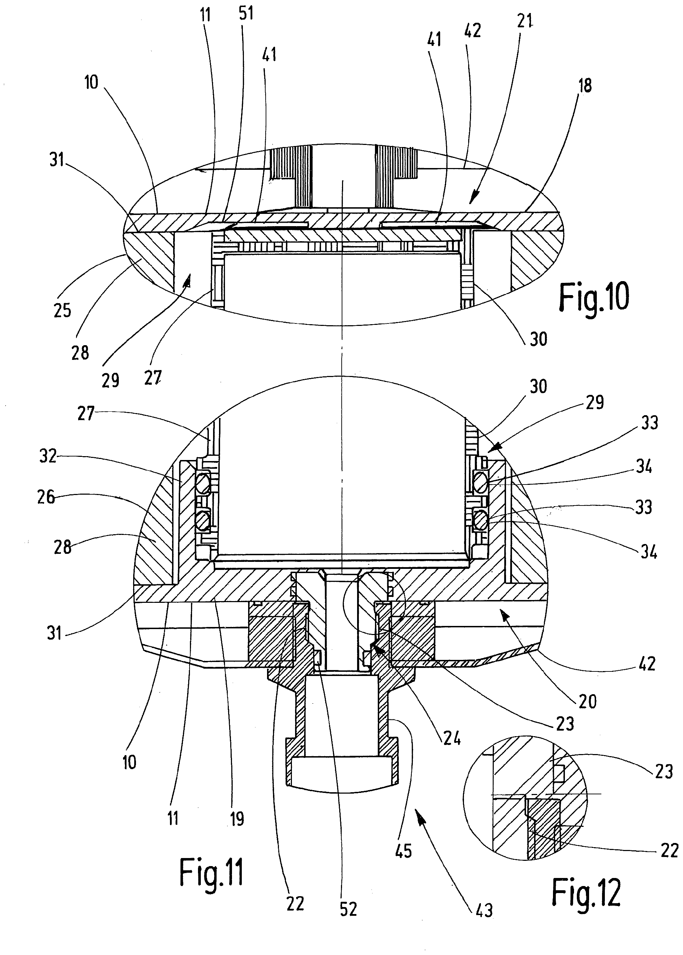

Fig. 9 zeigt eine Sicht auf die Innenseite des oberen Teils 47 des Filterbehälters 42 mit Justiernuten 51, in die die Justierrippen 41 des Deckels 18 der Filtervorrichtung 100 eingreifen können, wie in der Detailzeichnung der Fig. 10 gezeigt ist.

Die Fig. 10 bis 12 zeigen Details des Filterbehälters 42 mit der Filtervorrichtung 100 aus der Fig. 8. Insbesondere ist in Fig. 11 zu erkennen, wie der als Abflussstutzen 22 ausgebildete Austrittsbereich 24 der Filtervorrichtung 100 über ein Außengewinde 22 und einen Dichtring 52 mit dem Wasserauslass 45 des Filterbehälters 42 verbunden ist.

Zurückkehrend zu Fig. 2 ist gezeigt, dass sowohl das Gehäuse 11 der Filtervorrichtung 100 als auch die erste Filtereinheit 26 und die zweite Filtereinheit 27 im Wesentlichen zylinderförmig ausgebildet und konzentrisch zueinander angeordnet sind. Zwischen der ersten Filtereinheit 26 und der zweiten Filtereinheit 27 kann in einer nicht zwingenden Ausführungsform eine dritte Filtereinheit 53 angeordnet sein, welche eine Vielzahl von Poren oder Gitteröffnungen aufweist. Mit der dritten Filtereinheit 53 kann eine weitere Filterstufe realisiert werden.

Die Höhe 54 der ersten Filtereinheit 26 beträgt 105,5 mm.

### Liste der Bezugszeichen

- 100: Filtervorrichtung

- 10: Filterkartusche
- 11: Gehäuse
- 12: Eintrittsbereich
- 13: Außenwand
- 14: Mantelfläche
- 15: Gitterstruktur
- 16: Waben
- 17: Durchlassöffnungen
- 18: Deckel
- 19: Boden

- 20: Erste Stirnseite
- 21: Zweite Stirnseite
- 22: Abflussstutzen
- 23: Außengewinde
- 24: Austrittsbereich
- 25: Pfeil
- 26: Erste Filtereinheit
- 27: Zweite Filtereinheit
- 28: Aktivkohlefilter
- 29: Innenraum

- 30: Mikrofilter
- 31: Klebestelle
- 32: Aufnahmebereich
- 33: Dichtmittel
- 34: Dichtringe
- 35: Durchmesser
- 36: Innendurchmesser
- 37: Innenseite
- 38: Außenseite
- 39: Schutzgitter

- 40: Schutznetz
- 41: Justierrippen
- 42: Filterbehälter
- 43: Unterer Bereich
- 44: Wassereinlass
- 45: Wasserauslass
- 46: Sicherungsmechanismus
- 47: Oberer Teil
- 48: Unterer Teil
- 49: Außenwand

- 50: Zwischenraum
- 51: Justiernuten
- 52: Dichtring
- 53: Dritte Filtereinheit
- 54: Höhe

## Patentansprüche

1. Filtervorrichtung (100), insbesondere Filterkartusche (10), für Wasserfilter in Luftfahrzeugen, umfassend ein Gehäuse (11), wobei das Gehäuse (11) einen Eintrittsbereich (12) für zu filterndes Wasser und einen Austrittsbereich (24) für gefiltertes Wasser umfasst, wobei das Gehäuse (11) einen Deckel (18) und einen Boden (19) umfasst, wobei das Gehäuse (11) im Wesentlichen zylinderförmig mit einer Mantelfläche (14) und einer ersten Stirnseite (20) und einer zweiten Stirnseite (21) ausgebildet ist, wobei der Eintrittsbereich (12) in der Mantelfläche (14) des Gehäuses (11) angeordnet ist, wobei im Gehäuse (11) eine erste Filtereinheit (26) und eine zweite Filtereinheit (27) angeordnet sind, wobei die erste Filtereinheit (26) einen Aktivkohlefilter (28) umfasst und wobei die zweite Filtereinheit (27) einen Mikrofilter (30) umfasst, wobei der Austrittsbereich (24) im Boden (19) angeordnet ist, wobei der Deckel (18) und der Boden (19) an der ersten und der zweiten Stirnseite (20, 21) angeordnet sind und mit der ersten Filtereinheit (26) verklebt sind, wobei der Boden (19) einen zylindrischen Aufnahmebereich (32) aufweist, in dem die zweite Filtereinheit (27) angeordnet ist, wobei Dichtringe (34) zwischen der zweiten Filtereinheit (27) und dem Aufnahmebereich (32) angeordnet sind, **dadurch gekennzeichnet, dass** der Eintrittsbereich (12) eine Gitterstruktur (15) aufweist, durch die Wasser in die Filtervorrichtung eintreten kann, und dass die Gitterstruktur (15) zur Erhöhung der Stabilität aus einer Waben (16) umfassenden wabenförmigen Struktur besteht, wobei innerhalb der einzelnen Waben (16) Poren oder Durchlässe oder Durchlassöffnungen (17) angeordnet sind.

2. Filtervorrichtung (100) nach Anspruch 1, **dadurch gekennzeichnet, dass** die Filtervorrichtung in einem, bevorzugt für den Einsatz in Luftfahrzeugen, insbesondere für Passagierflugzeuge, zugelassenem, Filterbehälter (42) anordbar ist.

3. Filtervorrichtung (100) nach einem der vorgenannten Ansprüche, **dadurch gekennzeichnet, dass** das Gehäuse (11) und/oder die erste Filtereinheit (26) einen Durchmesser (53) von 50 mm bis 100 mm, bevorzugt von 70 mm bis 90 mm, weiter bevorzugt von 80 mm bis 90 mm, insbesondere bevorzugt von 85 mm bis 87 mm, ganz besonders bevorzugt von 86 mm, aufweist, und/oder dass die erste Filtereinheit (26) einen Innendurchmesser (36) von 20 mm bis 80 mm, bevorzugt von 30 mm bis 60 mm, weiter bevorzugt von 57 mm bis 59 mm, insbesondere bevorzugt von 58 mm, aufweist, und/oder dass das die erste Filtereinheit (26) eine Höhe (54) von 50 mm bis 150 mm, bevorzugt von 80 mm bis 120 mm, weiter bevorzugt von 100 mm bis 110 mm, insbesondere bevorzugt von 105 mm bis 106 mm, ganz besonders bevorzugt von 105,5 mm, aufweist, und/oder dass das Gehäuse (11) eine Höhe von 50 mm bis 150 mm, bevorzugt von 100 mm bis 140 mm, weiter bevorzugt von 110 mm bis 130 mm, insbesondere bevorzugt von 120 bis 130 mm, ganz besonders bevorzugt von 124,2 mm, aufweist.

4. Filtervorrichtung (100) nach einem der vorgenannten Ansprüche, **dadurch gekennzeichnet, dass** die erste Stirnseite (20) eine untere Stirnseite des Gehäuses (11) ist, und/oder dass der Austrittsbereich (24) in der ersten Stirnseite (20) angeordnet ist, wobei der Austrittsbereich (24) bevorzugt einen, insbesondere mit einem Außengewinde (23) versehenen, Abflussstutzen (22) umfasst oder ist.

5. Filtervorrichtung (100) nach einem der vorgenannten Ansprüche, **dadurch gekennzeichnet, dass** der Mikrofilter (30) eine Vielzahl von Poren aufweist, wobei die Poren eine Größe zwischen 0,001 µm und 1,0 µm, bevorzugt zwischen 0,01 µm und 0,5 µm, weiter bevorzugt zwischen 0,1 µm und 0,3 µm, insbesondere bevorzugt zwischen 0,15 µm und 0,25 µm, ganz besonders bevorzugt von 0,2 µm, aufweisen.

6. Filtervorrichtung (100) nach einem der vorgenannten Ansprüche, **dadurch gekennzeichnet, dass** die erste Filtereinheit (26) die zweite Filtereinheit (27) zumindest teilweise, bevorzugt vollständig, in einer Umfangsrichtung umschließt, wobei bevorzugt die erste Filtereinheit (26) in Form eines Hohlzylinders ausgebildet ist, wobei weiter bevorzugt die zweite Filtereinheit (27) in Form eines Hohlzylinders ausgebildet ist, und wobei die zweite Filtereinheit (27) in einem Innenbereich oder einem Innenraum (29) der ersten Filtereinheit (26) angeordnet ist.

7. Filtervorrichtung (100) nach einem der vorgenannten Ansprüche, **dadurch gekennzeichnet, dass** die Filtervorrichtung derart ausgebildet ist, dass zu filterndes Wasser in einer Strömungsrichtung durch den Eintrittsbereich (12), durch die erste Filtereinheit (26), durch die zweite Filtereinheit (27) und durch den Austrittsbereich (24), in dieser Reihenfolge, und/oder umgekehrt strömen kann.

8. Filtervorrichtung (100) nach einem der vorgenannten Ansprüche, **dadurch gekennzeichnet, dass** zwischen der ersten Filtereinheit (26) und der zweiten Filtereinheit (27) eine dritte Filtereinheit (53) angeordnet ist, wobei die dritte Filtereinheit (53) bevorzugt eine Vielzahl von Poren oder Gitteröffnungen aufweist, wobei die Poren und/oder die Gitteröffnungen der dritten Filtereinheit (53) einen Durchmesser von 50 µm bis 200 µm, bevorzugt von 75 µm bis 125 µm, besonders bevorzugt von 100 µm, aufweisen.

9. Filtervorrichtung (100) nach einem der vorgenannten Ansprüche, **dadurch gekennzeichnet, dass** auf einer Außenseite (38) und/oder einer Innenseite (37) der ersten Filtereinheit (26) ein Schutznetz (40) und/oder ein Schutzgitter (39) angeordnet ist, wobei das Schutznetz (40) und/oder das Schutzgitter (39) derart ausgebildet ist, dass ein Austritt von Aktivkohlepartikeln aus der ersten Filtereinheit (26) verhinderbar ist und/oder verhindert wird, und/oder dass der Aktivkohlefilter (28) aus säuregewaschener Kokosnussschale besteht oder diese umfasst.

10. Filtervorrichtung (100) nach einem der vorgenannten Ansprüche, **dadurch gekennzeichnet, dass** der Aktivkohlefilter (28) der ersten Filtereinheit (26) eine Porengröße zwischen 0,001 µm und 2,0 µm, bevorzugt zwischen 0,01 µm und 1,0 µm, weiter bevorzugt zwischen 0,3 µm und 0,7 µm, insbesondere bevorzugt zwischen 0,4 µm und 0,6µm, ganz besonders bevorzugt von 0,5 µm, aufweist.

11. Filterbehälter (42) mit einem Wassereinlass (44) und einem Wasserauslass (45), wobei der Wassereinlass (44) und der Wasserauslass (45) in einem unteren Bereich (43), bevorzugt an einer Unterseite, des Filterbehälters (42) angeordnet sind, **dadurch gekennzeichnet, dass** eine Filtervorrichtung (100) nach einem der vorgenannten Ansprüche in einem Innenraum des Filterbehälters (42) angeordnet ist.

12. Filterbehälter (42) nach Anspruch 11, **dadurch gekennzeichnet, dass** der Wasserauslass (45) mit dem Austrittsbereich (24), insbesondere dem Abflussstutzen (22), verbunden ist, und/oder dass zwischen einer Außenwand (49) des Filterbehälters (42) und dem Gehäuse (11) der Filtervorrichtung (100) ein, insbesondere umlaufender, Zwischenraum (50) angeordnet ist, sodass durch den Wassereinlass (44) eintretendes Wasser in den Zwischenraum (50) und die Filtervorrichtung (100) zumindest teilweise umgebend eintreten kann und durch den Eintrittsbereich (12) der Filtervorrichtung (100) in die Filtervorrichtung (100) eintreten kann, und/oder dass der Filterbehälter (42) zweiteilig ausgebildet ist.

13. Luftfahrzeug mit einem Wasserfilter umfassend eine Filtervorrichtung (100) nach einem der Ansprüche 1 bis 10 und/oder umfassend einen Filterbehälter (42) nach einem der Ansprüche 11 bis 12.

14. Verfahren zur Filterung von Wasser in einem Luftfahrzeug, unter Verwendung eines Filterbehälters (42) nach einem der Ansprüche 11 bis 12, **dadurch gekennzeichnet, dass** zu filterndes Wasser in einen unteren Bereich (43) des Filterbehälters (42) durch einen Wassereinlass (44) eingeleitet wird, dass das Wasser durch einen Aktivkohlefilter (28) und anschließend durch einen Mikrofilter (30) geleitet wird, und dass das gefilterte Wasser durch einen Wasserauslass (45) in dem unteren Bereich (43) des Filterbehälters (42) austritt.

## Claims

1. Filter device (100), in particular a filter cartridge (10), for water filters in aircraft, comprising a housing (11), wherein the housing (11) comprises an inlet region (12) for water to be filtered and an outlet region (24) for filtered water, wherein the housing (11) comprises a cover (18) and a base (19), wherein the housing (11) is formed substantially cylindrical in shape with a lateral surface (14) and a first end face (20) and a second end face (21), wherein the inlet region (12) is arranged in the lateral surface (14) of the housing (11), wherein a first filter unit (26) and a second filter unit (27) are arranged in the housing (11), wherein the first filter unit (26) comprises an activated carbon filter (28) and wherein the second filter unit (27) comprises a microfilter (30), wherein the outlet region (24) is arranged in the base (19), wherein the cover (18) and the base (19) are arranged on the first and second end faces (20, 21) and are bonded to the first filter unit (26), wherein the base (19) has a cylindrical receiving region (32) in which the second filter unit (27) is arranged, wherein sealing rings (34) are arranged between the second filter unit (27) and the receiving region (32), **characterized in that** the inlet region (12) has a grid structure (15) through which water can enter the filter device, and **in that** the grid structure (15) consists of a honeycomb-shaped structure comprising honeycombs (16) in order to increase stability, wherein pores or passages or passage openings (17) are arranged within the individual honeycombs (16).

2. Filter device (100) according to claim 1, **characterized in that** the filter device can be arranged in a filter container (42) which is preferably approved for use in aircraft, in particular for passenger aircraft.

3. Filter device (100) according to one of the preceding claims, **characterized in that** the housing (11) and/or the first filter unit (26) has a diameter (53) of 50 mm to 100 mm, preferably of 70 mm to 90 mm, more preferably of 80 mm to 90 mm, in particular preferably of 85 mm to 87 mm, most preferably of 86 mm, and/or that the first filter unit (26) has an inner diameter (36) of 20 mm to 80 mm, preferably of 30 mm to 60 mm, more preferably of 57 mm to 59 mm, in particular preferably of 58 mm, and/or that the first filter unit (26) has a height (54) of 50 mm to 150 mm, preferably of 80 mm to 120 mm, more preferably of 100 mm to 110 mm, in particular preferably of 105 mm to 106 mm, most preferably of 105.5 mm, and/or that the housing (11) has a height of 50 mm to 150 mm, preferably of 100 mm to 140 mm, more preferably of 110 mm to 130 mm, in particular preferably of 120 to 130 mm, most preferably of 124.2 mm.

4. Filter device (100) according to one of the preceding claims, **characterized in that** the first end face (20) is a lower end face of the housing (11), and/or **in that** the outlet region (24) is arranged in the first end face (20), wherein the outlet region (24) preferably comprises or is a drain connection (22), in particular provided with an external thread (23).

5. Filter device (100) according to one of the preceding claims, **characterized in that** the microfilter (30) has a plurality of pores, wherein the pores have a size between 0.001 µm and 1.0 µm, preferably between 0.01 µm and 0.5 µm, more preferably between 0.1 µm and 0.3 µm, in particular preferably between 0.15 µm and 0.25 µm, most preferably of 0.2 µm.

6. Filter device (100) according to one of the preceding claims, **characterized in that** the first filter unit (26) encloses the second filter unit (27) at least partially, preferably completely, in a circumferential direction, wherein preferably the first filter unit (26) is designed in the form of a hollow cylinder, wherein further preferably the second filter unit (27) is designed in the form of a hollow cylinder, and wherein the second filter unit (27) is arranged in an inner region or an inner space (29) of the first filter unit (26).

7. Filter device (100) according to one of the preceding claims, **characterized in that** the filter device is formed such that water to be filtered can flow in a flow direction through the inlet region (12), through the first filter unit (26), through the second filter unit (27) and through the outlet region (24), in this order, and/or vice versa.

8. Filter device (100) according to one of the preceding claims, **characterized in that** a third filter unit (53) is arranged between the first filter unit (26) and the second filter unit (27), wherein the third filter unit (53) preferably has a plurality of pores or grid openings, wherein the pores and/or the grid openings of the third filter unit (53) have a diameter of 50 µm to 200 µm, preferably of 75 µm to 125 µm, in particular preferably of 100 µm.

9. Filter device (100) according to one of the preceding claims, **characterized in that** a protective net (40) and/or a protective grid (39) is arranged on an outer side (38) and/or an inner side (37) of the first filter unit (26), wherein the protective net (40) and/or the protective grid (39) is formed in such a way that an escape of activated carbon particles from the first filter unit (26) can be prevented and/or is prevented, and/or **in that** the activated carbon filter (28) consists of or comprises acid-washed coconut shell.

10. Filter device (100) according to one of the preceding claims, **characterized in that** the activated carbon filter (28) of the first filter unit (26) has a pore size between 0.001 µm and 2.0 µm, preferably between 0.01 µm and 1.0 µm, more preferably between 0.3 µm and 0.7 µm, in particular preferably between 0.4 µm and 0.6 µm, most preferably of 0.5 µm.

11. Filter container (42) with a water inlet (44) and a water outlet (45), wherein the water inlet (44) and the water outlet (45) are arranged in a lower region (43), preferably on an underside, of the filter container (42), **characterized in that** a filter device (100) according to one of the preceding claims is arranged in an inner space of the filter container (42).

12. Filter container (42) according to claim 11, **characterized in that** the water outlet (45) is connected to the outlet region (24), in particular the drain connection (22), and/or **in that** an, in particular circumferential, intermediate space (50) is arranged between an outer wall (49) of the filter container (42) and the housing (11) of the filter device (100), so that water entering through the water inlet (44) can enter the intermediate space (50) and at least partially surround the filter device (100) and can enter the filter device (100) through the inlet region (12) of the filter device (100), and/or **in that** the filter container (42) is formed in two parts.

13. Aircraft with a water filter comprising a filter device (100) according to one of claims 1 to 10 and/or comprising a filter container (42) according to one of claims 11 to 12.

14. Method for filtering water in an aircraft, using a filter container (42) according to one of claims 11 to 12, **characterized in that** water to be filtered is introduced into a lower region (43) of the filter container (42) through a water inlet (44), **in that** the water is passed through an activated carbon filter (28) and then through a microfilter (30), and **in that** the filtered water exits through a water outlet (45) in the lower region (43) of the filter container (42).

## Revendications

1. Dispositif de filtration (100), en particulier cartouche filtrante (10), pour des filtres à eau dans des aéronefs, comprenant un boîtier (11), le boîtier (11) comprenant une zone d'entrée (12) pour de l'eau à filtrer et une zone de sortie (24) pour de l'eau filtrée, le boîtier (11) comprenant un couvercle (18) et un fond (19), le boîtier (11) étant réalisé essentiellement en forme de cylindre avec une surface d'enveloppe (14) et une première face frontale (20) et une deuxième face frontale (21), la zone d'entrée (12) étant disposée dans la surface d'enveloppe (14) du boîtier (11), une première unité de filtrage (26) et une deuxième unité de filtrage (27) étant disposées dans le boîtier (11), la première unité de filtrage (26) comprenant un filtre à charbon actif (28) et la deuxième unité de filtrage (27) comprenant un microfiltre (30), la zone de sortie (24) étant disposée dans le fond (19), le couvercle (18) et le fond (19) étant disposés sur la première et la deuxième face frontale (20, 21) et étant collés à la première unité de filtre (26), le fond (19) présentant une zone de réception cylindrique (32) dans laquelle est disposée la deuxième unité de filtre (27), des bagues d'étanchéité (34) étant disposées entre la deuxième unité de filtre (27) et la zone de réception (32), **caractérisé en ce que** la zone d'entrée (12) présente une structure en grille (15) à travers laquelle de l'eau peut entrer dans le dispositif de filtration, et **en ce que** la structure en grille (15) est constituée, pour augmenter la stabilité, d'une structure en nid d'abeilles comprenant des alvéoles (16), des pores ou des passages ou des ouvertures de passage (17) étant disposés à l'intérieur des différentes alvéoles (16).

2. Dispositif de filtration (100) selon la revendication 1, **caractérisé en ce que** le dispositif de filtration peut être disposé dans un réservoir de filtre (42), de préférence agréé pour l'utilisation dans des aéronefs, en particulier pour des avions de passagers.

3. Dispositif de filtration (100) selon l'une des revendications précédentes, **caractérisé en ce que** le boîtier (11) et/ou la première unité de filtration (26) présente un diamètre (53) de 50 mm à 100 mm, de préférence de 70 mm à 90 mm, plus préférentiellement de 80 mm à 90 mm, en particulier préférentiellement de 85 mm à 87 mm, tout particulièrement de 86 mm, et/ou **en ce que** la première unité de filtration (26) présente un diamètre intérieur (36) de 20 mm à 80 mm, de préférence de 30 mm à 60 mm, plus préférentiellement de 57 mm à 59 mm, en particulier de préférence de 58 mm, et/ou **en ce que** la première unité de filtre (26) présente une hauteur (54) de 50 mm à 150 mm, de préférence de 80 mm à 120 mm, de préférence encore de 100 mm à 110 mm, en particulier de préférence de 105 mm à 106 mm, de préférence encore de 105,5 mm, et/ou **en ce que** le boîtier (11) présente une hauteur de 50 mm à 150 mm, de préférence de 100 mm à 140 mm, de préférence encore de 110 mm à 130 mm, en particulier de préférence de 120 à 130 mm, éminemment de préférence de 124,2 mm.

4. Dispositif de filtration (100) selon l'une des revendications précédentes, **caractérisé en ce que** la première face frontale (20) est une face frontale inférieure du boîtier (11), et/ou **en ce que** la zone de sortie (24) est disposée dans la première face frontale (20), la zone de sortie (24) comprenant ou étant de préférence une tubulure d'évacuation (22), en particulier pourvue d'un filetage extérieur (23).

5. Dispositif de filtration (100) selon l'une des revendications précédentes, **caractérisé en ce que** le microfiltre (30) comporte une pluralité de pores, les pores ayant une taille comprise entre 0,001 µm et 1,0 µm, de préférence entre 0,01 µm et 0,5 µm, plus préférentiellement entre 0,1 µm et 0,3 µm, encore plus préférentiellement entre 0,15 µm et 0,25 µm, tout particulièrement de 0,2 µm.

6. Dispositif de filtration (100) selon l'une des revendications précédentes, **caractérisé en ce que** la première unité de filtration (26) entoure au moins partiellement, de préférence complètement, la deuxième unité de filtration (27) dans une direction périphérique, de préférence la première unité de filtration (26) étant réalisée sous la forme d'un cylindre creux, de préférence encore la deuxième unité de filtration (27) étant réalisée sous la forme d'un cylindre creux, et la deuxième unité de filtration (27) étant disposée dans une zone intérieure ou un espace intérieur (29) de la première unité de filtration (26).

7. Dispositif de filtration (100) selon l'une des revendications précédentes, **caractérisé en ce que** le dispositif de filtration est conçu de telle sorte que de l'eau à filtrer peut s'écouler dans un sens d'écoulement à travers la zone d'entrée (12), à travers la première unité de filtration (26), à travers la deuxième unité de filtration (27) et à travers la zone de sortie (24), dans cet ordre, et/ou inversement.

8. Dispositif de filtration (100) selon l'une des revendications précédentes, **caractérisé en ce qu'**une troisième unité de filtration (53) est disposée entre la première unité de filtration (26) et la deuxième unité de filtration (27), la troisième unité de filtration (53) présentant de préférence une pluralité de pores ou d'ouvertures de grille, les pores et/ou les ouvertures de grille de la troisième unité de filtration (53) présentant un diamètre de 50 µm à 200 µm, de préférence de 75 µm à 125 µm, de manière particulièrement préférée de 100 µm.

9. Dispositif de filtration (100) selon l'une des revendications précédentes, **caractérisé en ce qu'**un filet de protection (40) et/ou une grille de protection (39) sont disposés sur un côté extérieur (38) et/ou un côté intérieur (37) de la première unité de filtration (26), le filet de protection (40) et/ou la grille de protection (39) étant conçus de telle sorte qu'une sortie de particules de charbon actif hors de la première unité de filtration (26) peut être empêchée et/ou est empêchée, et/ou **en ce que** le filtre à charbon actif (28) est constitué des coques de noix de coco lavées à l'acide ou comprend celle-ci.

10. Dispositif de filtration (100) selon l'une des revendications précédentes, **caractérisé en ce que** le filtre à charbon actif (28) de la première unité de filtration (26) présente une taille de pores comprise entre 0,001 µm et 2,0 µm, de préférence entre 0,01 µm et 1,0 µm, plus préférentiellement entre 0,3 µm et 0,7 µm, en particulier de préférence entre 0,4 µm et 0,6 µm, tout particulièrement de 0,5 µm.

11. Réservoir de filtre (42) avec une entrée d'eau (44) et une sortie d'eau (45), l'entrée d'eau (44) et la sortie d'eau (45) étant disposées dans une zone inférieure (43), de préférence sur un côté inférieur, du réservoir de filtre (42), **caractérisé en ce qu'**un dispositif de filtration (100) selon l'une des revendications précédentes est disposé dans un espace intérieur du réservoir de filtre (42).

12. Réservoir de filtre (42) selon la revendication 11, **caractérisé en ce que** la sortie d'eau (45) est reliée à la zone de sortie (24), en particulier à la tubulure d'évacuation (22), et/ou **en ce qu'**un espace intermédiaire (50), en particulier périphérique, est disposé entre une paroi extérieure (49) du réservoir de filtre (42) et le boîtier (11) du dispositif de filtre (100), de sorte que de l'eau entrant par l'entrée d'eau (44) peut pénétrer dans l'espace intermédiaire (50) et entourer au moins partiellement le dispositif de filtration (100) et peut pénétrer dans le dispositif de filtration (100) par la zone d'entrée (12) du dispositif de filtration (100), et/ou **en ce que** le réservoir de filtre (42) est réalisé en deux parties.

13. Aéronef équipé d'un filtre à eau comprenant un dispositif de filtration (100) selon l'une des revendications 1 à 10 et/ou comprenant un réservoir de filtre (42) selon l'une des revendications 11 à 12.

14. Procédé de filtration d'eau dans un aéronef, utilisant un réservoir de filtre (42) selon l'une quelconque des revendications 11 à 12, **caractérisé en ce qu'**on introduit de l'eau à filtrer dans une zone inférieure (43) du réservoir de filtre (42) par une entrée d'eau (44), **en ce qu'**on fait passer l'eau à travers un filtre à charbon actif (28) et puis à travers un microfiltre (30), et **en ce que** l'eau filtrée sort par une sortie d'eau (45) dans la zone inférieure (43) du réservoir de filtre (42).
